# EUROPEAN PATENT APPLICATION

(11) **EP 4 425 640 A1**
(43) Date of publication of application: **04.09.2024**
(21) Application number: 22885790.0
(22) Date of filing: 20.10.2022
(51) Int. Cl.: H01M 10/42, H01M 4/505, H01M 4/525, H01M 4/04, H01M 4/62, H01M 10/0525, H01M 10/058

(54) **LITHIUM SUPPLEMENTING ADDITIVE, PREPARATION METHOD THEREFOR AND APPLICATION THEREOF**

(30) Priority: 29.10.2021 CN 202111280036
(71) Applicant: Shenzhen Innovazone Technology Co., Ltd., Shenzhen, Guangdong 518000 (CN)
(72) Inventor: PEI, Xianyinan, Shenzhen, Guangdong 518000 (CN); WAN, Yuanxin, Shenzhen, Guangdong 518000 (CN); KONG, Lingyong, Shenzhen, Guangdong 518000 (CN); TAN, Qiqing, Shenzhen, Guangdong 518000 (CN); ZHAO, Zhongke, Shenzhen, Guangdong 518000 (CN); ZHANG, Li, Shenzhen, Guangdong 518000 (CN); LAI, Jiayu, Shenzhen, Guangdong 518000 (CN); CHEN, Xinyi, Shenzhen, Guangdong 518000 (CN)
(74) Representative: Viering, Jentschura & Partner mbB Patent- und Rechtsanwälte
(86) International application number: PCT/CN2022/126439
(87) International publication number: WO 2023/071913

(57) **Abstract**

The present application discloses a lithium-supplementing additive, a preparation method therefor, and an application thereof. The lithium-supplementing additive includes a core body and a functional encapsulation layer covering the core body. The core body includes a lithium-supplementing material, and the lithium-supplementing material is a lithium-containing material having a unidirectional capacity, in which lithium ions are deintercalated during a first charge and free from intercalation during a discharge. Based on the lithium-supplementing material having a unidirectional capacity included in the lithium-supplementing additive of the present application, and lithium ions can be effectively deintercalated during the first charge and prevented from being intercalated into the lithium-supplementing material again during the discharge, therefore, the lithium-supplementing effect of the lithium-supplementing additive provided by the present application is ensured, and the initial efficiency and the overall electrochemical performance of a battery containing the lithium-supplementing additive is improved. The preparation method for the lithium-supplementing additive can ensure that the structure and the electrochemical performance of the prepared lithium-supplementing additive are stable, the efficiency is high, and the production cost is reduced.

## Description

This application claims the priority of the Chinese patent application submitted to the CNIPA on Oct. 29, 2021, with an application number 202111280036.6 and titled "LITHIUM-SUPPLEMENTING ADDITIVE, PREPARATION METHOD THEREFOR AND APPLICATION THEREOF", the entire contents of which are incorporated by reference in this application.

### TECHNICAL FIELD

The present application relates to the field of secondary batteries, more particular to a lithium-supplementing additive, a preparation method therefor, and an application thereof.

### BACKGROUND

As people's awareness of environmental protection and energy crisis increases, lithium-ion batteries are becoming more and more popular as a green and environmentally friendly energy storage technology. Lithium-ion batteries have been widely utilized due to their high capacity density, long cycle life, and high stability. With the widespread application of electronic products and the vigorous development of electric vehicles, the market for lithium-ion batteries has become increasingly broad, but meanwhile, requirements are imposed on specific capacity and cycle performance of lithium-ion batteries.

During the first charge and discharge process of the lithium-ion battery, a solid electrolyte interface (SEI) film layer will be formed on the surface of the anode, and will convert a large amount of active lithium into lithium carbonate, lithium fluoride, and alkyllithium, resulting in the loss of lithium in the cathode material, reducing the initial Coulombic efficiency and the battery capacity of the battery. In lithium-ion battery systems using graphite anodes, about 10% of the lithium source is consumed for the first charge. When anode materials with high specific capacity are used, such as alloys (silicon, tin, etc.), oxides (silicon oxide, tin oxide), and amorphous carbon anodes, the consumption of lithium sources in the cathode will be further aggravated.

In order to further increase the energy density of the lithium-ion battery, it is an effective method to pre-supplement lithium to the cathode or the anode. However, the current cathode lithium-supplementing material or the anode lithium-supplementing material has the following defects: due to the too high activity, the current cathode lithium-supplementing material or the anode lithium-supplementing material may easily react with the moisture, carbon dioxide, and the like in any process of storage, transportation, and processing, making them difficult for stable storage for a long time, and also reducing the lithium-supplementing effect of the cathode lithium-supplementing material or the anode lithium-supplementing material, or further leading to a decrease in processing performance, resulting in a decrease in the electrochemical performance of the prepared electrode plate and other battery components. Therefore, the cathode lithium-supplementing process which is relatively safe and easy to be operated has received more and more attentions.

Although currently a coating layer is used to cover the surface of the lithium-supplementing material to protect the lithium-supplementing material, the currently disclosed lithium-supplementing materials are generally lithium-supplementing materials with reversible capacity, in which, lithium ions are deintercalated during the first charge process, but are still intercalated into the lithium-supplementing materials during the discharge process, resulting in unsatisfactory lithium-supplementing performance of existing lithium-supplementing materials, for example, the lithium-supplementing gram capacity is limited, the initial efficiency is high (high reversible specific capacity), etc., and the production cost is high.

### SUMMARY OF INVENTION

### TECHNICAL PROBLEMS

The purpose of the present application is to overcome the above-mentioned deficiencies in the related art, to provide a lithium-supplementing additive and a preparation method therefor, to solve the problem that the existing lithium-supplementing additive is unstable or has reversible capacity characteristics, making it unable to exert the complete theoretical specific capacity.

Another object of the present application is to provide an electrode plate and a secondary battery containing the electrode plate, so as to solve the technical problems of unsatisfactory initial Coulombic efficiency and battery capacity of the existing secondary batteries.

### TECHNICAL SOLUTIONS TO PROBLEMS

### TECHNICAL SOLUTIONS

In order to achieve the purpose of the above application, in one aspect of the present application, a lithium-supplementing additive is provided. The lithium-supplementing additive comprises a core body and a functional encapsulation layer covering the core body. The core body comprises a lithium-supplementing material, and the lithium-supplementing material is a lithium-containing material having a unidirectional capacity, in which lithium ions are deintercalated during a first charge and free from intercalation during a discharge.

Further, a unit cell of the lithium-supplementing material is in an inverse fluorite structure having a crystal structure space group of P42/ nmc [137].

Further, the lithium-supplementing material comprises a chemical formula of xLi₆MO₄·(1-x)Li₂O, and in the chemical formula, 0 < x≤1, M comprises at least one of Cr, Mn, Fe, Co, Ni, Cu, and Zn.

Further, the core body has a particle size of 100 nm to 50 µm.

Further, the core body is a primary particle, and the particle size of the primary particle is 100 nm to 10 µm.

Or alternatively, the core body is a secondary particle, and the particle size of the secondary particle is 200 nm to 50 µm.

Further, the functional encapsulation layer comprises at least one of an ionic conductor encapsulation layer and an electronic conductor encapsulation layer.

Further, a material of the electronic conductor encapsulation layer comprises at least one of a conductive carbon material, a conductive polymer, or a conductive oxide.

Further, a thickness of the electronic conductor encapsulation layer is 1 nm to 100 nm
Further, a material of the electronic conductor encapsulation layer comprises a conductive carbon material and a lithium carbonate, and the electronic conductor encapsulation layer is in contact with the core body.

In an exemplary embodiment, a content of lithium carbonate accounts for 0.5 wt. % to 1.5 wt. % of a content of the electronic conductor encapsulation layer.

Further, a material of the ionic conductor encapsulation layer comprises at least one of perovskite, NASICON, garnet, or polymer solid electrolytes.

Further, a thickness of the ionic conductor encapsulation layer is 1 nm to 200 nm
In a second aspect, a preparation method for a lithium-supplementing additive is provided. The preparation method for the lithium-supplementing additive comprises steps of:
providing a core body material for lithium supplementation, in which, the core body material comprises a lithium-supplementing material, and the lithium-supplementing material is a lithium-containing material having a unidirectional capacity, in which lithium ions are deintercalated during a first charge and free from intercalation during a discharge; and
in a first protective atmosphere, forming a functional encapsulation layer on a surface of the core body material, and enabling the functional encapsulation layer to completely cover the core body material to obtain a lithium-supplementing additive.

Further, the formed functional encapsulation layer comprises an electronic conductor encapsulation layer, and the step of forming the functional encapsulation layer on the surface of the core body material comprises the following step:
forming the electronic conductor encapsulation layer that completely covers the core body material on the surface of the core body material; in which, a material of the electronic conductor encapsulation layer comprises at least one of a conductive carbon material, a conductive polymer, or a conductive oxide;
or alternatively, the formed functional encapsulation layer comprises an ionic conductor encapsulation layer, and the step of forming the functional encapsulation layer on the surface of the core body material comprises the following step:
forming the ionic conductor encapsulation layer that completely covers the core body material on the surface of the core body material; in which, a material of the ionic conductor encapsulation layer comprises at least one of perovskite, NASICON, garnet, or polymer solid electrolytes;
or alternatively, the formed functional encapsulation layer comprises composite layers formed by the electronic conductor encapsulation layer and the ionic conductor encapsulation layer, and the step of forming the functional encapsulation layer on the surface of the core body material comprises the following step:
forming the electronic conductor encapsulation layer that completely covers the core body material on the surface of the core body material, and forming the ionic conductor encapsulation layer on a surface of the electronic conductor encapsulation layer, in which, a material of the electronic conductor encapsulation layer comprises at least one of a conductive carbon material, a conductive polymer, or a conductive oxide; and a material of the ionic conductor encapsulation layer comprises at least one of perovskite, NASICON, garnet, or polymer solid electrolytes.

Further, a material of the formed electronic conductor encapsulation layer comprises a mixture of a conductive carbon material and lithium carbonate; and the step of forming the electronic conductor encapsulation layer comprises steps of:
forming a conductive carbon coating layer that completely covers the core body material on the surface of the core body material, and performing heat treatment in a protective atmosphere.

Further, the lithium-supplementing material comprises a lithium-supplementing material having a chemical formula of xLi₆MO₄·(1-x)Li₂O, and the lithium-supplementing material having chemical formula of xLi₆MO₄·(1-x)Li₂O is prepared by the following steps:
mixing an oxide of an metal M with a lithium source according to an elemental stoichiometric ratio of xLi₆MO₄·(1-x)Li₂O, to obtain a precursor of xLi₆MO₄·(1-x)Li₂O, in which, in the chemical formula, 0 < x≤1, and M comprises at least one of Cr, Mn, Fe, Co, Ni, Cu, and Zn; and
sintering the precursor in a second protective atmosphere, and enabling a unit cell of xLi₆MO₄·(1-x)Li₂O to be an inverse fluorite structure and have a crystal structure space group of P42/ nmc [137],

Further, the sintering step is performed at a temperature of 400°C to 1000°C for a duration of 1 hr to 24 hrs;

Further, the sintering step comprises performing said sintering at a heating rate of 0.5°C/min to 10°C/min until the temperature is 400°C to 1000°C

Further, the second protective atmosphere is an atmosphere formed by any protective gas of a nitrogen gas, an argon gas, a nitrogen-argon mixed gas, a nitrogen-hydrogen mixed gas, and an argon-hydrogen mixed gas.

Further, the oxide of the metal M comprises at least one of CrO, Cr₂O₃, CrO₂, CrO₃, MnO, Mn₂O₃, MnO₂, Mn₃O₄, FeO, Fe₂O₃, Fe₃O₄, CoO, Co₂O₃, CoOz, Co₃O₄, NiO, Ni₂O₃, CuO, and ZnO.

Further, the lithium source comprises at least one of LiOH, LiOH·H₂O, Li₂O, Li₂CO₃, LiNO₃, and LiAc.

In a third aspect of the present application, an electrode plate is provided. The electrode plate comprises a current collector and an electrode active layer bonded to a surface of the current collector. The electrode active layer is doped with the lithium-supplementing additive of the present application or is the lithium-supplementing additive prepared by the preparation method of the present application.

In a fourth aspect, a secondary battery is provided. The secondary battery of the present application comprises a cathode sheet and an anode sheet, in which, the cathode sheet or the anode sheet is the electrode plate.

Compared with the related art, the present application has the following technical effects:

The core body contained in the lithium-supplementing additive of the present application contains lithium-supplementing materials, so the lithium-supplementing additive of the present application can provide abundant lithium, and can be used as a "sacrifice agent" during the first cycle of charging, and discharge all the lithium ions as much as possible, to supplement the irreversible lithium ions consumed by the formation of the SEI film on the anode, thereby maintaining the abundance of lithium ions in the battery system and improving the initial efficiency and overall electrochemical performance of the battery. Moreover, the lithium-supplementing material contained in the core body is a lithium-containing material having a unidirectional capacity, in which lithium ions are deintercalated during a first charge and free from intercalation during a discharge, which enables the lithium-supplementing additive of the present application to have unidirectional capacity characteristic, and lithium ions can be effectively deintercalated during the first charge and prevented from being intercalated into the lithium-supplementing material again during the discharge, therefore, the lithium-supplementing effect of the lithium-supplementing additive provided by the present application is ensured. In addition, the functional encapsulation layer contained in the lithium-supplementing additive of the present application can effectively protect the core body, so that the lithium-supplementing material contained in the core body is isolated from moisture and carbon dioxide in the ambient environment, ensuring the stability of the core body and ensuring the lithium-supplementing effect and the stability of lithium supplementation, as well as good processing performance of the lithium-supplementing additive.

The preparation method for the lithium-supplementing additive of the present application can effectively prepare the lithium-supplementing additive having a core-shell structure, and enable the functional encapsulation layer to effectively cover the core body containing the lithium-supplementing material having the unidirectional capacity, thereby ensuring the lithium-supplementing effect and the stability of lithium supplementation, as well as good processing performance of the lithium-supplementing additive. In addition, the preparation method for the lithium-supplementing additive can ensure that the structure and the electrochemical performance of the prepared lithium-supplementing additive are stable, the efficiency is high, and the production cost is reduced.

Since the electrode plate of the present application contains the lithium-supplementing additive of the present application, during the charge and discharge process, the contained lithium-supplementing additive can be used as a lithium source and as a "sacrifice agent" during the first cycle of charging, to supplement the irreversible lithium ions consumed by the formation of the SEI film on the anode, thereby maintaining the abundance of lithium ions in the battery system and improving the initial efficiency and overall electrochemical performance of the battery.

Because the secondary battery of the present application contains the electrode plate of the present application, the lithium ion battery of the present application has excellent initial Coulombic efficiency, battery capacity, and cycle performance, long service life, and stable electrochemical performance.

### BENEFICIAL EFFECT OF INVENTION

### DESCRIPTION OF THE DRAWINGS

### DESCRIPTION OF THE DRAWINGS

In order to more clearly illustrate the technical solutions in embodiments of the present application or in the related art, the drawings that need to be used in the description of the embodiments or the related art will be briefly described hereinbelow. Obviously, the accompanying drawings in the following description are only some embodiments of the present application. For those skilled in the art, other drawings can be obtained based on these drawings without creative work.
FIG. 1 is a structural schematic diagram of a lithium-supplementing additive of the embodiments of the present application; in which, part a is a core body in a primary particle; part b is a core body in a secondary particle;
FIG. 2 is a first structural schematic diagram of the lithium-supplementing additive shown in FIG. 1;
FIG. 3 is a second structural schematic diagram of the lithium-supplementing additive shown in FIG. 1;
FIG. 4 is a third structural schematic diagram of the lithium-supplementing additive shown in FIG. 1;
FIG. 5 is a schematic flowchart of a preparation method for a lithium-supplementing additive according to embodiments of the present application;
FIG. 6 provides an XRD pattern of the lithium-supplementing additives provided by Example 1 and Example 2; and
FIG. 7 is a lithium-supplementing gram capacity curves of lithium ion batteries containing lithium-supplementing additives provided in Example 1, Example 2, and Comparative example 1.

### EMBODIMENTS OF INVENTION

### IMPLEMENTION MANNER OF INVENTION

In order to make the purpose, technical solution and advantages of the present application clearer, the present application will be described in detail below in conjunction with the accompanying embodiments. It should be understood that the specific embodiments described here are only used to explain the present application, rather than limit the present application.

In this application, the term "and/or", which describes the relationship between related objects, means that there can be three relationships, for example, A and/or B, which can represent circumstances that A exists alone, A and B exist meanwhile, and B exists alone, where A and B can be singular or plural. The character "/" generally indicates that the associated objects are in an "or" relationship.

In this application, "at least one" means one or more, and "a plurality of" means two or more. "At least one item below" or similar expressions refer to any combination of these items, including any combination of single item or plural items. For example, "at least one of a, b, or c" can mean: a, b, c, a-b (i.e., a and b), a-c, b-c, or a-b-c, where a, b, and c can be singular or plural respectively.

It should be understood that, in various embodiments of the present application, the numbers of the above-mentioned processes do not imply the sequence of execution, some or all of the steps may be executed in parallel or sequentially, and the execution sequence of each process should be based on its functions and determined by the internal logic, and should not constitute any limitation on the implementation process of the embodiments of the present application.

The terms used in the embodiments of the present application are merely for the purpose of describing specific embodiments, and are not intended to limit the present application. Unless clearly dictated otherwise, the singular forms "a", "the" and "said" as used in the embodiments of this application and the appended claims intended to include the plural forms as well.

The weight of the relevant compositions mentioned in the examples of this application can not only refer to the specific content of each composition, but also represent the proportional relationship between the weights of the compositions. It is within the scope disclosed in the embodiments of the present application that the content of the compositions is proportionally scaled up or down. Specifically, the mass described in the description of the embodiments of the present application may be a mass unit known in the chemical field, such as µg, mg, g, and kg.

The terms "first" and "second" are merely used for descriptive purposes to distinguish objects such as substances from each other, and cannot be understood as indicating or implying relative importance or implying the number of indicated technical features. For example, without departing from the scope of the embodiments of the present application, "the first" may also be referred to as "the second", and similarly, "the second" may also be referred to as "the first". Thus, a feature defined as "first" or "second" may expressly or implicitly include one or more of the features.

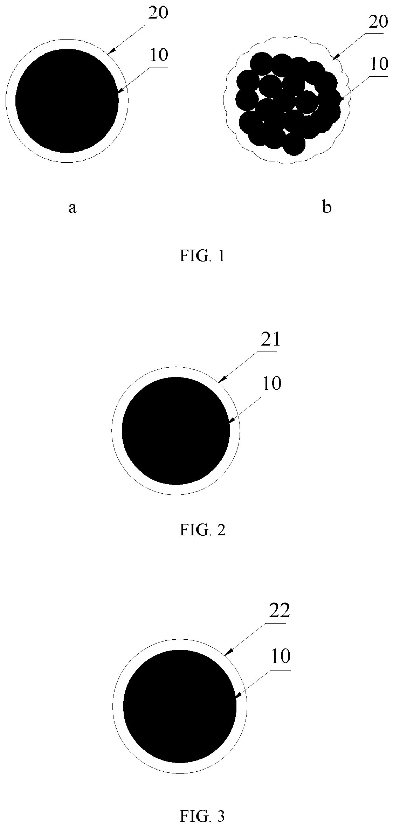

In the first aspect, embodiments of the present application provide a lithium-supplementing additive. The lithium-supplementing additive of the embodiments of the present application comprises a core body and a functional encapsulation layer covering the core body, that is, the lithium-supplementing additive of the embodiments of the present application has a core-shell structure, as in the embodiments, the lithium-supplementing additive of the embodiments of the present application has a structure as shown in FIGS. 1 to 4, comprising a core body 10 and a functional encapsulation layer 20 covering the core body 10.

The core body 10 comprises a lithium-supplementing material, and the lithium-supplementing material is a lithium-containing material having a unidirectional capacity, in which lithium ions are deintercalated during a first charge and free from intercalation during a discharge. That is to say, in the lithium-supplementing additive of the embodiments of the present application, the core body 10 is a lithium source for lithium supplementation. In this way, the core body 10 is rich in lithium, thereby ensuring that the lithium-supplementing additive in the embodiments of the present application can provide abundant lithium. When being added to the electrode as an additive, the lithium-supplementing additive is used as a "sacrifice agent" during the first cycle of charging, and discharge all the lithium ions contained in the lithium-supplementing additive as much as possible, so as to supplement the irreversible lithium ions consumed by the formation of the SEI film on the anode.

Moreover, the lithium-supplementing material contained in the core body 10 also has a unidirectional capacity characteristic, which means that the lithium-supplementing material can extract lithium ions during the first charge, and has no lithium ion intercalation during the discharge. Since the lithium-supplementing material has a unidirectional capacity characteristic, the lithium-supplementing additive of the embodiments of the present application has a unidirectional capacity characteristic, thereby ensuring the excellent lithium-supplementing effect of the lithium-supplementing additive of the embodiments of the present application.

In embodiments, a unit cell of the lithium-supplementing material is in an inverse fluorite structure having a crystal structure space group of P42/ nmc [137]. In the lithium-supplementing material of such a crystal structure, positions of lithium ions in the unit cell are more stable, which can improve the above-mentioned unidirectional capacity characteristics of the lithium-supplementing material, and is more conducive to the deintercalation of lithium ions during the first charge as well as the prevention of the lithium ions from intercalation during the discharge, thereby improving the lithium-supplementing effect of the lithium-supplementing additive of the embodiments of the present application, so that the lithium-supplementing additive of the embodiments of the present application can exert all the theoretical specific capacity. Moreover, the lithium-supplementing material of such a crystal structure has excellent electrical conductivity, and combined with its unidirectional capacity characteristics, can effectively reduce the polarization phenomenon during the charge.

Based on the above unidirectional capacity characteristics of the lithium-supplementing material contained in the core body 10, in an embodiment, the lithium-supplementing material may include a chemical formula of xLi₆MO₄·(1-x)Li₂O, in which, in the chemical formula, 0 < x≤1, M comprises at least one of Cr, Mn, Fe, Co, Ni, Cu, and Zn. The lithium-supplementing material has a unit cell in a stable inverse fluorite structure and the crystal structure thereof has a space group of P42/ nmc [137], which have better unidirectional capacity characteristics, higher conductivity, and better lithium-supplementing effect, and lower polarization phenomenon during the charge. For example, when the lithium-supplementing material is xLi₆MO₄·(1-x)Li₂O, Li₆MO₄ presents a unit cell in the inverse fluorite structure, and the crystal structure space group is P42/ nmc [137], which makes xLi₆MO₄·(1-x)Li₂O have excellent unidirectional capacity characteristics, higher conductivity, better lithium-supplementing effect, and lower polarization during the charge. Moreover, Li₆MO₄ contained in xLi₆MO₄·(1-x)Li₂O plays a catalytic role on Li₂O, so that Li₂O decomposes to provide lithium ions during the first charge process, and plays a synergistic effect with Li₆MO₄, enhancing the lithium-supplementing effect of xLi₆MO₄·(1-x). In addition, the type of lithium-supplementing material of the core body 10 may be the lithium-supplementing material for the cathode.

In an embodiment, the core body 10 may be at least one of a primary particle and a secondary particle, and specifically, the lithium-supplementing material contained in the core body 10 forms at least one of the primary particle and the secondary particle. The primary particle is shown in part a of FIG. 1, and the secondary particle is shown in part b of FIG. 1. In other embodiments, the core body has a particle size of 100 nm to 50 µm. For example, when the core body 10 is a primary particle as shown in part a in FIG. 1, the particle size of the primary particle, that is, the particle size distribution of the core body 10, is 100 nm to 10 µm; and when the core body 10 is a secondary particle as shown in part b in FIG. 1, the particle size of the secondary particle, that is, the particle size distribution of the core body 10, is 200 nm to 50 µm. Herein, the secondary particle refers to an agglomerated particle formed by aggregating more than one primary particle. By controlling the particle shape and the particle size of the core body 10, on the basis of the core body's ability to provide abundant lithium ions, the core body can also improve the processability of the lithium-supplementing additive in the preparation of lithium battery slurry, in which, the smaller primary particles can also deintercalate more lithium ions.

In addition, the lithium-supplementing material contained in the core body 10 in the above-mentioned embodiments is specifically, for example, xLi₆MO₄·(1-x)Li₂O, which, is rich in lithium but is unstable when meeting water and carbon dioxide, and may easily react with water and carbon dioxide, which leads to the reduction of the lithium-supplementing effect of the lithium-supplementing additive in the embodiments of the present application, and also reduces its processing performance, for example, the lithium-supplementing additive containing the above lithium-supplementing material has a series problems, for example, making the viscosity of the slurry containing the above lithium-supplementing material increase rapidly and the slurry quickly gel and lose the fluidity, thereby causing that the subsequent processing is unable to be performed. Therefore, on the basis of the core body 10 in the above-mentioned embodiments, the functional encapsulation layer 20 contained in the lithium-supplementing additive in the above-mentioned embodiments covers the core body 10 to form a complete coating layer. Therefore, the functional encapsulation layer 20 can effectively protect the core body 10, so that the core body 10, specifically the lithium-supplementing material, is isolated from moisture and carbon dioxide in the ambient environment, the lithium-supplementing effect and the stability of lithium supplementation of the lithium-supplementing material contained in the core body 10 are ensured, and the lithium-supplementing stability and the uniformity of dispersion of lithium-supplementing additives in the electrode active slurry and the active layer are also ensured, thereby improving the processing performance of the lithium-supplementing additive. Therefore, in the embodiments of the present application, the functional encapsulation layer 20 should at least have the property of isolating moisture and carbon dioxide, such as a dense encapsulation layer.

Based on the above functions of the functional encapsulation layer 20, the material of the functional encapsulation layer 20 may be a material capable of at least isolating moisture and carbon dioxide, and may comprise, for example, at least one of a ceramic, a polymer, or a carbon material.

Further, since the functional encapsulation layer 20 covers the surface of the core body 10, during the deintercalation of the lithium ions during the first charge of the lithium-supplementing material contained in the core body 10, lithium ions need to pass through the functional encapsulation layer 20, therefore, the electrochemical performance and thickness of the functional encapsulation layer 20 will also affect the deintercalation and the migration efficiency of the lithium ions. Therefore, the functional encapsulation layer 20 ideally has excellent ionic conductivity properties on the basis of isolation from moisture and carbon dioxide and other unfavorable factors. In an embodiment, the functional encapsulation layer 20 may include an ionic conductor encapsulation layer.

In addition, similarly based on the functional encapsulation layer 20 covering the surface of the core body 10, during or after the lithium-supplementing process of the lithium-supplementing additives, the conductivity of the functional encapsulation layer 20 will also affect the electrochemical performance, including the rate and initial efficiency of the battery. Therefore, the functional encapsulation layer 20 ideally has excellent electronic conductivity properties on the basis of isolation from moisture and carbon dioxide and other unfavorable factors. In an embodiment, the functional encapsulation layer 20 may include an electronic conductor encapsulation layer.

Therefore, as an embodiment of the present application, the functional encapsulation layer 20 contained in the lithium-supplementing additive may include at least one of an ionic conductor encapsulation layer and an electronic conductor encapsulation layer. Therefore, the functional encapsulation layer 20 has at least the following structure:
In an embodiment, as shown in FIG. 2, the functional encapsulation layer 20 comprises an electronic conductor encapsulation layer 21.

In another embodiment, as shown in FIG. 3, the functional encapsulation layer 20 comprises an ionic conductor encapsulation layer 22.

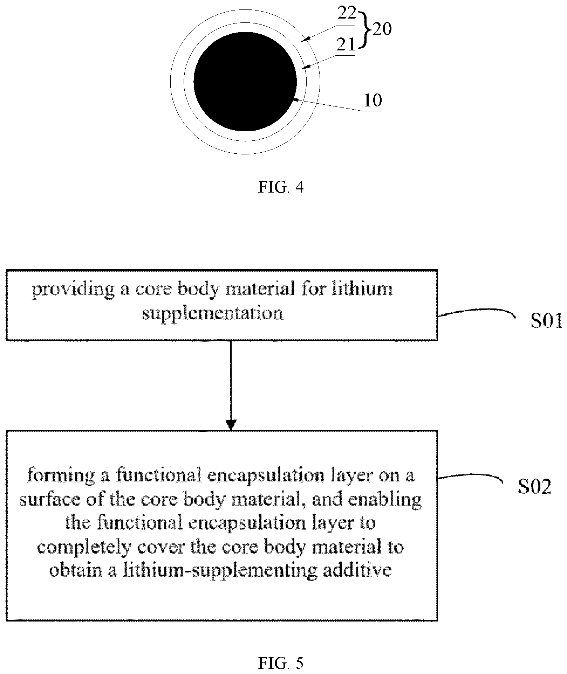

In yet another embodiment, as shown in FIG. 4, the functional encapsulation layer 20 comprises composite layers of an electronic conductor encapsulation layer 21 and an ionic conductor encapsulation layer 22, and the electronic conductor encapsulation layer 21 covers the core body 10, and the ionic conductor encapsulation layer 22 covers an outer surface of the electronic conductor encapsulation layer 21. It should be understood that based on the functional encapsulation layer 20 of the composite structure as shown in FIG. 4, the ionic conductor encapsulation layer 22 may also cover the core body 10, and in such case, the electronic conductor encapsulation layer 21 covers an outer surface of the ionic conductor encapsulation layer 22.

The electronic conductor encapsulation layer 21 added in the above-mentioned functional encapsulation layer 20 can enhance the electronic conductivity of the functional encapsulation layer 20, thereby enhancing the electronic conductivity of the lithium-supplementing additive, which is conducive to reducing the internal impedance of the electrode; and meanwhile, during and after the core body 10 working as the "sacrifice agent" to release the lithium ions, the electronic conductor encapsulation layer 21 can also be adopted for secondary use, and play an auxiliary role as a conductive agent inside the electrode. Based on the effect of the electronic conductor encapsulation layer 21, based on the effect of the electronic conductor encapsulation layer 21, when the functional encapsulation layer 20 only comprises the electronic conductor encapsulation layer 21, the electronic conductor encapsulation layer 21 should have a compact structure and be completely covered; and when the functional encapsulation layer 20 at least comprises an electronic conductor encapsulation layer 21 and an ionic conductor encapsulation layer 22, the electronic conductor encapsulation layer 21 can be a non-completely covering layer structure, or a non-dense structure, but the composite covering layer formed by the electronic conductor encapsulation layer 21 and the ionic conductor encapsulation layer 22 should have the function of isolating from harmful components such as moisture and carbon dioxide.

In an embodiment, the thickness of the electronic conductor encapsulation layer 21 is 1 nm to 100 nm, preferably 1 nm to 50 nm, and more preferably 2 nm to 20 nm. In other embodiments, a content of the electronic conductor encapsulation layer 21 accounts for a content of the lithium-supplementing additive of 0.1 wt. % to 30 wt. %, preferably 0.1 wt. % to 10 wt. %, more preferably 0.5 wt. % to 5 wt. %.

In an embodiment, a material of the electronic conductor encapsulation layer 21 comprises at least one of a carbon material, a conductive polymer, or a conductive oxide. In a specific embodiment, the carbon material comprises at least one of an amorphous carbon, a carbon nanotubes, a graphite, a carbon black, a graphene, and the like. In a specific embodiment, the conductive polymer comprises one or more of an organic polymer having a structure of [C₆H₇O₆Na]ₙ, an organic polymer having a structure of [CeH₇O₂(OH)₂OCH₂COONa]ₙ, an organic polymer having a structure of [C₃H₄O₂]ₙ, an organic polymer having a structure of [C₃H₃O₂Mₐ]ₙ, an organic polymer having a structure of [C₃H₃N]ₙ, an organic polymer comprising a structure of - [CH₂-CF₂]ₙ-, an organic polymer comprising a structure of -[NHCO]-, an organic polymer containing a structure of an imide ring -[CO-N-CO]- on a main chain and a polyvinylpyrrolidone, in which, Mₐ is an alkali metal element. In some embodiments of the present application, the polymer comprises one or more of a polyvinylidene fluoride, a sodium alginate, a sodium carboxymethyl cellulose, a polyacrylic acid, a polyacrylate, a polyacrylonitrile, a polyamide, a polyimide, a polyvinylpyrrolidone, a polyethylene oxide (PEO), a polypyrrole (PPy), a polytetrafluoroethylene (PTFE), and a polyurethane (PU). In some embodiments of the present application, the polymer comprises one or more of a sodium carboxymethylcellulose and a polyacrylic acid. The sodium carboxymethylcellulose and the polyacrylic acid are two-dimensional polymers having good bonding effect, which can effectively cover the core body of the lithium-rich material, thereby avoiding the contact between the core body of lithium-rich material and air, and improving the stability of lithium-supplementing additives. In embodiments of the present application, the molecular mass of the polymer is greater than or equal to 100,000. The molecular weight of the polymer can be, but not limited to, 100,000, 150,000, 200,000, 300,000, 500,000, or 1 million. The greater the molecular mass of the polymer, the higher the density and structural strength of the polymer layer, which is more conducive to the protection of the core body 10. In a specific embodiment, the conductive oxide may include at least one of In₂O₃, ZnO, and SnO₂. By adjusting the thickness and material of the electronic conductor encapsulation layer 21, the electronic conductivity thereof can be further improved.

In a further embodiment, a material of the electronic conductor encapsulation layer 21 comprises a conductive carbon material and a lithium carbonate, and the electronic conductor encapsulation layer 21 is in contact with the core body, that is, covers a surface of the core body 10. A content of lithium carbonate accounts for 0.5 wt. % to 1.5 wt. % of a content of the electronic conductor encapsulation layer. By using the mixture comprising the conductive carbon material and lithium carbonate as the material of the electronic conductor encapsulation layer 21, on the one hand, the compactness of the electronic conductor encapsulation layer 21 can be improved, the ability of the electronic conductor encapsulation layer 21 to isolate water vapor and carbon dioxide can be improved, and the stability in storage, processing, and lithium supplementation of the lithium-supplementing additive can be improved; on the other hand, the mixture of the conductive carbon material and lithium carbonate improves the conductivity of the electronic conductor encapsulation layer 21, and stimulates the gram capacity of lithium-supplementing additives; thirdly, difficult processing problems caused by residual alkali of the core body can be solved.

In an embodiment, the above-mentioned ionic conductor encapsulation layer 22 can enhance the ionic conductivity of the functional encapsulation layer 20, thereby enhancing the ionic conductivity of the lithium-supplementing additive, which is conducive to the outward transport of lithium ions of the core body; meanwhile, when the core body 10 acts as After the "victim" releases lithium ions, the ionic conductor encapsulation layer 22 can also be used for secondary use, and plays an auxiliary role in enhancing ion transmission inside the electrode. After the core body 10 works as the "sacrifice agent" to release the lithium ions, the electronic conductor encapsulation layer 21 can also be adopted for secondary use, and play an auxiliary role as a conductive agent inside the electrode. Based on the effect of the ionic conductor encapsulation layer 22, when the functional encapsulation layer 20 only comprises the ionic conductor encapsulation layer 22, the ionic conductor encapsulation layer 22 should have a compact structure and be completely covered; and when the functional encapsulation layer 20 at least comprises an ionic conductor encapsulation layer 22 and an electronic conductor encapsulation layer 21, the ionic conductor encapsulation layer 22 can be a non-completely covering layer structure, or a non-dense structure, but the composite covering layer formed by the ionic conductor encapsulation layer 22 and the electronic conductor encapsulation layer 21 should have the function of isolating from harmful components such as moisture and carbon dioxide. In an embodiment, a thickness of the ionic conductor encapsulation layer 22 is 1 nm to 200 nm, preferably 1 nm to 50 nm, more preferably 2 nm to 20 nm, and more preferably 5 nm to 20 nm. In another embodiment, a material of the ionic conductor encapsulation layer 22 comprises at least one of perovskite, NASICON, garnet, or polymer solid electrolytes. In a specific embodiment, the perovskite soli electrolyte comprises at least one of Li₃ₓLa_{2/3-x}TiO₃ (LLTO), for example, Li_{0.5}La_{0.5}TiO₃, Li_{0.33}La_{0.57}TiO₃, Li_{0.29}La_{0.57}TiO₃, Li_{0.33}Ba_{0.25}La_{0.39}TiO₃, (Li_{0.33}La_{0.56})_{1.005}Ti_{0.99}Al_{0.01O3}, Li_{0.5}La_{0.5}Ti_{0.95}Zr_{0.05}O₃, and the like; the NASICON solid electrolyte comprises, but is not limited to, Li_{1.4}Al_{0.4}Ti_{1.6}(PO₄)₃(LATP); the garnet solid electrolyte comprises but is not limited to at least one of Li₇La₃Zr₂O₁₂ (LLZO), Li_{6.4}La₃Zr_{1.4}Ta_{0.6}O₁₂, Li_{6.5}La₃Zr_{1.5}Ta_{0.5}O₁₂; and the polymer solid electrolyte comprises at least one of PEO/PPO/PVDF that dissolves lithium salts, and the like. By adjusting the thickness and material of the ionic conductor encapsulation layer 22, the ionic conductivity can be further improved.

In a second aspect, embodiments of the present application further provide a preparation method for the above lithium-supplementing additive. The process flow of the preparation method for the lithium-supplementing additive is shown in FIG. 5, combined with FIGS. 1 to 4, the preparation method comprises the following steps:
Step S01: providing a core body material for lithium supplementation; and
Step S02: in a first protective atmosphere, forming a functional encapsulation layer on a surface of the core body material, and enabling the functional encapsulation layer to completely cover the core body material to obtain a lithium-supplementing additive.

The core body material in step S01 is the material contained in the core body 10 in the lithium-supplementing additive in above embodiments of the present application. Therefore, the core body material comprises a lithium-supplementing material, and the lithium-supplementing material is a lithium-containing material having a unidirectional capacity, in which lithium ions are deintercalated during a first charge and free from intercalation during a discharge. The functional encapsulation layer in step S02 is the functional encapsulation layer 20 contained in the lithium-supplementing additive in the above embodiments of the present application. Therefore, in order to reduce space, the core body material in step S01 and the functional encapsulation layer in step S02 will not be repeated herein.

In embodiments, when the lithium-supplementing material comprises the chemical formula xLi₆MO₄·(1-x)Li₂O, the lithium-supplementing material can be prepared by mixing and sintering source compounds of all elements contained in the lithium-supplementing material according to a stoichiometric ratio of the elements, and controlling conditions of the sintering to make the produced lithium-supplementing material have the above-mentioned unidirectional capacity characteristics, specifically, have a unit cell in an inverse fluorite structure and have a crystal structure space group of P42/ nmc [137].

For example, when the lithium-supplementing material is xLi₆MO₄(1-x) Li₂O, the lithium-supplementing material of xLi₆MO₄(1-x) Li₂O is prepared according to the following preparation method:
Step S011: mixing an oxide of an metal M with a lithium source according to an elemental stoichiometric ratio of xLi₆MO₄·(1-x)Li₂O, to obtain a precursor of xLi₆MO₄·(1-x)Li₂O; and
Step S012: sintering the precursor in a second protective atmosphere, and enabling a unit cell of xLi₆MO₄·(1-x)Li₂O to be an inverse fluorite structure and have a crystal structure space group of P42/ nmc [137].

The stoichiometric ratio of elements in step S011 may be a molar ratio, or may be a mass ratio converted according to a chemical formula. In an embodiment, the oxide of the metal M may include at least one of CrO, Cr₂O₃, CrO₂, CrO₃, MnO, Mn₂O₃, MnO₂, Mn₃O₄, FeO, Fe₂O₃, Fe₃O₄, CoO, Co₂O₃, CoOz, Co₃O₄, NiO, Ni₂O₃, CuO, and ZnO; and the lithium source may include at least one of LiOH, LiOH·H₂O, Li₂O, Li₂CO₃, LiNO₃, and LiAc.

In other embodiments, the mixing treatment of the oxide of the metal M and the lithium source can be performed by a solid phase mixing treatment or a liquid phase mixing treatment, and can also be the solid phase and liquid phase combined mixing treatment.

The solid phase mixing treatment is to mix the oxide of the metal M and the lithium source according to the ratio, and then mechanically stir or high-energy ball mill a resulting mixture to form a uniform solid phase precursor. In the liquid phase mixing process, the lithium source can be dissolved in the solvent first, then the metal oxide is added and stirred evenly to form a mixture, then the solvent is evaporated to form a uniform precursor.

The sintering treatment in step S012 is to sinter the precursor to form the supplementing material, and has the above-mentioned unidirectional capacity characteristics that lithium ions are deintercalated during the first charge and are not intercalated during the discharge. Specifically, the supplementing material has a unit cell in an inverse fluorite structure and a crystal structure space group of P42/ nmc [137]. In an embodiment, the temperature of the sintering treatment may be 400 °C to 1000°C, preferably 400°C to 900°C, more preferably 450°C to 850°C. The duration of the sintering treatment may be 1 hr to 24 hrs, preferably 3 hrs to 15 hrs, more preferably 5 hrs to 12 hrs. The sintering treatment may be carried out by raising the temperature to 400-1000° C at a heating rate of 0.5-10°C/min, preferably 1°C/min to 6°C/min, and more preferably 2°C/min and 5°C/min. By controlling the sintering process, the generated Li supplementing materials such as xLi₆MO₄·(1-x)Li₂O have a unit cell in the inverse fluorite structure and the crystal structure space group of P42/ nmc [137]. In an embodiment, the second protective atmosphere is an atmosphere formed by any protective gas of a nitrogen gas, an argon gas, a nitrogen-argon mixed gas, a nitrogen-hydrogen mixed gas, and an argon-hydrogen mixed gas. The protective atmosphere can effectively ensure the stability of the crystal structure and the electrochemical performance of the sintered product.

The method for the functional encapsulation layer formed in step S02 can be prepared according to the structure of the functional encapsulation layer 20 contained in the lithium-supplementing additive in the above embodiments of the present application. The first protective atmosphere may be a conventional oxygen-free atmosphere, such as a protective atmosphere formed of at least one of a nitrogen gas, an argon gas, a nitrogen-argon mixed gas.

In an embodiment, when the formed functional encapsulation layer structure includes an electronic conductor encapsulation layer 21 as shown in FIG. 2, the method for forming the functional encapsulation layer on the surface of the core body material includes the following steps:
Step S021: forming in the first protective atmosphere, the electronic conductor encapsulation layer 21 that completely covers the core body material on the surface of the core body material;
When the material of the electronic conductor encapsulation layer 21 is at least one of a carbon material, a conductive polymer, or a conductive oxide, the precursor material forming the electronic conductor encapsulation layer 21 includes a precursor of the carbon material, a precursor of the conductive polymer, or a precursor of the conductive oxide. The carbon material, the conductive polymer, and the conductive oxide are all the materials of the electronic conductor encapsulation layer 21 contained in the lithium-supplementing additive. Then the precursor of the carbon material, the precursor of the conductive polymer, or the precursor of the conductive oxide are also the precursors for forming the above carbon material, the conductive polymer, or the conductive oxide, respectively. Then, the method and conditions for forming the electronic conductor encapsulation layer 21 made of the carbon material, the conductive polymer, or conductive oxide are specifically according to the method and conditions for forming the carbon material, the conductive polymer, or the conductive oxide.

As in a specific embodiment, when the material of the electronic conductor encapsulation layer 21 is a conductive polymer layer, the method for forming the electronic conductor encapsulation layer 21 may include, but be not limited to, the following steps:

The core body material is dispersed in the solution containing the conductive high molecular polymer, and a resulting mixture is then vacuum dried to form an electronic conductor encapsulation layer 21 of the conductive polymer on the surface of the core body material. The solvent of the solution is a solvent capable of uniformly dispersing or dissolving the polymer, such as one or more of N-methylpyrrolidone, methanol, ethanol, isopropanol, acetone, tetrahydrofuran, and ether.

In another specific embodiment, when the material of the electronic conductor encapsulation layer 21 is a carbon material layer, the method for forming the electronic conductor encapsulation layer 21 may include, but be not limited to, the following steps:
The core body material is dispersed in a solution containing carbon source, and a resulting mixture is dried and carbonized to form an electronic conductor encapsulation layer 21 of the carbon material on the surface of the core body material. The carbon source can be at least one of a solid-phase carbon source, a liquid-phase carbon source, or a gas-phase carbon source. The solid-phase carbon source can be at least one of starch, glucose, fructose, sucrose, cellulose, lignin, amino acid, PEO, epoxy resin, phenolic resin, and the like. The liquid-phase carbon source can be at least one of liquid-phase alkanes, liquid-phase olefins, and liquid-phase alkynes containing five to sixteen carbon atoms. The temperature of carbonization treatment can be 400°C to 1000°C, preferably 400°C to 900°C, more preferably 450°C to 850°C; the duration for the carbonization treatment is 1 hr to 12 hrs, preferably 1 hr to 8 hrs, more preferably 1 hr to 5 hrs. In another embodiment, the carbonization treatment may include heating at a heating rate of 0.5°C/min to 10°C/min, preferably 1°C/min to 6°C/min, and more preferably 2°C/min to 5°C/min to 400°C to 1000°C. For example, when the carbon source is PEO, specifically, the core body material and PEO can be mixed evenly, and the PEO reaches the melting point at 300°C, and uniformly covers the surface of the core body material, after that, a resulting coated material is sintered in an inert atmosphere and preserved at a temperature of 600 °C for 16 hrs, and the carbon layer is formed after the completion of the sintering.

In addition, when the carbon source is a gaseous carbon source, the core body material can be introduced into the gaseous carbon source in the above-mentioned carbonization treatment environment to deposit a carbon material layer on the surface of the core body material in situ. The specific gaseous carbon source can be at least one of methane, ethane, propane, butane, ethylene, propylene, butene, pentene, acetylene, propyne, and butyne.

In an embodiment, when the material of the formed electronic conductor encapsulation layer 21 includes a mixture of a conductive carbon material and a lithium carbonate, the method for forming the electronic conductor encapsulation layer 21 includes the following steps:
forming a conductive carbon coating layer that completely covers the core body material on the surface of the core body material, and performing heat treatment in a protective atmosphere to enable formation in the conductive carbon coating layer.

The protective atmosphere can be but not limited to the protective atmosphere formed by 80% Vol N₂/CO₂. Heat treatment can be, but not limited to, raising the temperature to 500°C at a heating rate of 200°C/hr and then preserving the temperature for 1 hr. By controlling the heat treatment conditions, a certain content of lithium carbonate can be generated in the conductive carbon coating layer.

In another embodiment, when the formed functional encapsulation layer includes an ionic conductor encapsulation layer 22 as shown in FIG. 3, the method for forming a functional encapsulation layer on the surface of the core body material includes the following steps:
Step S022: forming, in the first protective atmosphere, the ionic conductor encapsulation layer 22 that completely covers the core body material on the surface of the core body material.

When the material of the ionic conductor encapsulation layer 22 is at least one of the perovskite, NASICON, garnet, or polymer solid electrolytes, the precursor material forming the ionic conductor encapsulation layer 22 includes precursors for the perovskite, NASICON garnet, or polymer solid electrolytes, and the method and conditions for forming the ionic conductor encapsulation layer 22 are specifically according to the method and conditions for forming the perovskite, NASICON, garnet, or polymer solid electrolytes.

In another embodiment, when the formed functional encapsulation layer includes a composite layer of an electronic conductor encapsulation layer 21 and an ionic conductor encapsulation layer 22 as shown in FIG. 4, the method for forming a functional encapsulation layer 20 on the surface of the core body material Including the following steps:
Step S023 : forming, in the first protective atmosphere, the electronic conductor encapsulation layer 21 that completely covers the core body material on the surface of the core body material, and forming the ionic conductor encapsulation layer 22 on a surface of the electronic conductor encapsulation layer 21.

Therefore, the above preparation method for the lithium-supplementing additive can effectively prepare the lithium-supplementing additive of the above embodiments of the present application having a core-shell structure, and enable the functional encapsulation layer to effectively cover the core body containing the unidirectional capacity lithium-supplementing material, thereby ensuring the lithium-supplementing effect and the stability of lithium supplementation, as well as good processing performance of the lithium-supplementing additive of the above embodiments of the present application. Moreover, relevant performances of the prepared lithium-supplementing additive can be optimized by controlling the materials and process conditions of the core body and functional encapsulation layer. In addition, the preparation method for the lithium-supplementing additive can ensure that the structure and the electrochemical performance of the prepared lithium-supplementing additive are stable, the efficiency is high, and the production cost is reduced.

In a third aspect, embodiments of the present application further provide an electrode plate. The electrode plate of the embodiments of the present application comprises a current collector and an electrode active layer bonded to a surface of the current collector, and the electrode active layer is doped with the lithium-supplementing additive in the above embodiments of the present application. Since the electrode plate of the present application contains the lithium-supplementing additive of the above embodiments of the present application, during the charge and discharge process, the contained lithium-supplementing additive can play the functions as described in the above, that is, can be used as a lithium source and as a "sacrifice agent" during the first cycle of charging, to supplement the irreversible lithium ions consumed by the formation of the SEI film on the anode, thereby maintaining the abundance of lithium ions in the battery system and improving the initial efficiency and overall electrochemical performance of the battery.

The electrode plate may be a conventional electrode plate of a secondary battery, for example, including a current collector and an electrode active layer bonded on the surface of the current collector.

In an embodiment, the content of the lithium-supplementing additive contained in the embodiments of the present application accounts for 0.1 wt. % to 30 wt. %, preferably 0.1 wt. % to 10 wt. %, of a mass content of the electrode active layer. The electrode active layer includes, in addition to the lithium-supplementing additive, an electrode active material, a binding agent, and a conductive agent. The binding agent can be one or more of commonly used electrode binding agents, such as a polyvinylidene chloride, a soluble polytetrafluoroethylene ethylene, a styrenebutadiene rubber, a hydroxypropylmethylcellulose, a methylcellulose, a carboxymethylcellulose, a polyvinyl alcohol, an acrylonitrile copolymer, a sodium alginate, a chitosan, and a chitosan derivative. In the embodiment of the present application, the conductive agent may be a commonly used conductive agent, such as one or more of graphite, carbon black, acetylene black, graphene, carbon fiber, C60 and carbon nanotubes. The electrode active material can be selected according to the type of the electrode, such as the difference between the cathode and the anode, and the corresponding cathode active material or anode active material. The cathode active material includes one or more of lithium cobalt oxide, lithium manganese oxide, lithium iron phosphate, lithium vanadium phosphate, lithium vanadium oxyphosphate, lithium fluorovanadium phosphate, lithium titanate, lithium nickel cobalt manganate, and lithium nickel cobalt aluminate. In such case, the type of the above lithium-supplementing additive should be compatible with the type of the electrode active material, for example, when the electrode active material is a cathode active material, then the above lithium-supplementing additive should be suitable for use as a cathode lithium-supplementing additive; and when the electrode active material is an anode active material, then the above lithium-supplementing additive should be suitable for use as an anode lithium-supplementing additive.

In embodiments, the preparation process of the electrode plate can be as follows: mixing an electrode active material, a lithium-supplementing additive, a conductive agent, and a binding agent to obtain an electrode slurry, coating the electrode slurry on a current collector, followed with drying, rolling, mold cutting, and other steps to obtain a cathode sheet.

In a fourth aspect, embodiments of the present application further provide a secondary battery. The secondary battery of the embodiments of the present application includes necessary components such as a cathode sheet, an anode sheet, a separator, and an electrolyte, and may also include other necessary or auxiliary components. The cathode sheet and/or the anode sheet are the cathode sheet and/or the anode sheet of the above embodiments of the present application, that is, the cathode active layer contained in the cathode sheet contains the lithium-supplementing additive of the above embodiments of the present application. The anode sheet may also contain the lithium-supplementing additive in the above embodiments of the present application in the anode active layer.

Since the secondary battery of the embodiments of the present application contains the lithium-supplementing additive in the embodiments of the present application as described in the above, based on that the lithium-supplementing additive in the above embodiments of the present application has the excellent lithium-supplementing performance, or further has ionic conductivity and/or electronic conductivity, the secondary battery of the embodiments of the present application is enabled to have excellent initial Coulombic efficiency, battery capacity, and cycle performance, long service life and stable electrochemical performance.

Hereinbelow, a number of specific examples are used to illustrate the lithium-supplementing additive of the present application, the preparation method therefor, the present application thereof, and the like.

### 1. Lithium-supplementing additive and its preparation method examples:

### Example 1

This example provides a lithium-supplementing additive and a preparation method therefor. The lithium-supplementing additive includes: a core body made of a lithium-supplementing material including Li₆MnO₄ in an inverse fluorite structure, and a dense carbon layer covering the core body. The particle size of the core body is about 5 µm to 10 µm, and the thickness of the dense carbon layer is about 30 nm.

The preparation method for the lithium-supplementing additive of the present example comprises the following steps:
S1. Preparation of lithium-supplementing material including Li₆MnO₄ in the inverse fluorite structure:
   MnO and LiOH were mixed in a solid state according to the stoichiometric ratio, ball milled for 2 hrs at a rotational speed of 30 Hz; resulting uniformly mixed reactants were sintered at 800°C for 10 hrs under the protection of nitrogen atmosphere to obtain the Li₆MnO₄ material in the inverse fluorite structure.
S2. Preparation of dense carbon functional encapsulation layer:

The Li₆MnO₄ material and a glucose powder were mixed at a mass ratio of 2:1, ball milled for 4 hrs under protection of a nitrogen atmosphere at a rotational speed of 40 Hz. Resulting uniformly mixed reactants were sintered at 800°C for 2 hrs under the protection of the nitrogen atmosphere to obtain a dense carbon coating layer of the Li₆MnO₄@C material.

### Example 2

This example provides a lithium-supplementing additive and a preparation method therefor. The lithium-supplementing additive includes: a core body made of a lithium-supplementing material including 0.9Li₆CoO₄·0.1Li₂O in an inverse fluorite structure, and a dense carbon layer covering the core body. The particle size of the core body is about 1 µm to 5 µm, and the thickness of the dense carbon layer is about 20 nm.

The preparation method for the lithium-supplementing additive of the present example comprises the following steps:
S 1. Preparation of lithium-supplementing material including 0.9Li₆CoO₄·0.1Li₂O:
   CoO and LiOH were mixed in a solid state according to a molar ratio of 0.9 : 5.6, ball milled for 2 hrs at a rotational speed of 25 Hz; resulting uniformly mixed reactants were sintered at 750°C for 8 hrs under the protection of nitrogen atmosphere to obtain the 0.9Li₆CoO₄·0.1Li₂O material in the inverse fluorite structure.
S2. Preparation of dense carbon functional encapsulation layer:
   The 0.9Li₆CoO₄·0.1Li₂O material and a glucose powder were mixed at a mass ratio of 3:1, ball milled for 3 hrs under protection of a nitrogen atmosphere at a rotational speed of 35 Hz. Resulting uniformly mixed reactants were sintered at 750°C for 2 hrs under the protection of the nitrogen atmosphere to obtain a dense carbon coating layer of the 0.9Li₆CoO₄·0.1Li₂O@C material.

### Example 3

This example provides a lithium-supplementing additive and a preparation method therefor. The lithium-supplementing additive includes: a core body made of a lithium-supplementing material including Li₆FeO₄ in an inverse fluorite structure, and a dense carbon layer covering the core body. The particle size of the core body is about 5 µm to 20 µm, and the thickness of the dense carbon layer is about 5 nm.

The preparation method for the lithium-supplementing additive of the present comparative example comprises the steps:
S1. Preparation of lithium-supplementing material including Li₆FeO₄in the inverse fluorite structure:
   FeO and LiOH were mixed in a solid state according to the stoichiometric ratio, ball milled for 2 hrs at a rotational speed of 30 Hz; resulting uniformly mixed reactants were sintered at 700°C for 8 hrs under the protection of a nitrogen and hydrogen mixed gas atmosphere to obtain the Li₆FeO₄ material in the inverse fluorite structure.
S2. Preparation of dense carbon functional encapsulation layer:
   The Li₆FeO₄ material and a glucose powder were mixed at a mass ratio of 5:1, ball milled for 2 hrs under protection of a nitrogen atmosphere at a rotational speed of 30 Hz. Resulting uniformly mixed reactants were sintered at 700°C for 2 hrs under the protection of the nitrogen and hydrogen mixed gas atmosphere to obtain a dense carbon coating layer of the Li₆FeO₄@C material.

### Example 4

This example provides a lithium-supplementing additive and a preparation method therefor. The lithium-supplementing additive includes: a core body made of a lithium-supplementing material including 0.8Li₆ZnO₄·0.2Li₂O in an inverse fluorite structure, and a dense carbon layer covering the core body. The particle size of the core body is about 1 µm to 5 µm, and the thickness of the dense carbon layer is about 10 nm.

The preparation method for the lithium-supplementing additive of the present example comprises the following steps:
S1. Preparation of lithium-supplementing material including 0.8Li₆ZnO₄·0.2Li₂O:
   ZnO and LiOH were mixed in a solid state according to a molar ratio of 0.8 : 5.2, ball milled for 3 hrs at a rotational speed of 45 Hz; resulting uniformly mixed reactants were sintered at 750°C for 6 hrs under the protection of nitrogen atmosphere to obtain the 0.8Li₆ZnO₄·0.2Li₂O material in the inverse fluorite structure.
S2. Preparation of dense carbon functional encapsulation layer:
   The 0.8Li₆ZnO₄·0.2Li₂O material and a glucose powder were mixed at a mass ratio of 3:1, ball milled for 4 hrs under protection of a nitrogen atmosphere at a rotational speed of 40 Hz. Resulting uniformly mixed reactants were sintered at 750°C for 2 hrs under the protection of the nitrogen atmosphere to obtain a dense carbon coating layer of the 0.8Li₆ZnO₄·0.2Li₂O @C material.

### Comparative example 1

This comparative example provides a lithium-supplementing additive and a preparation method therefor. The lithium-supplementing additive includes: a core body made of a lithium-supplementing material including Li₂NiO₂, and a dense carbon layer covering the core body.

The preparation method for the lithium-supplementing additive of the present comparative example comprises the steps:
The cathode lithium-supplementing additive including Li₂NiO₂ was mixed with a glucose powder at a mass ratio of 2:1, ball milled for 2 hrs under protection of a nitrogen atmosphere at a rotational speed of 30 Hz. Resulting uniformly mixed reactants were sintered at 700°C for 2 hrs under the protection of the nitrogen atmosphere to obtain a dense carbon coating layer of the Li₂NiO₂@C material.

### 2. Li-ion battery example:

The lithium-supplementing additives provided by the above Examples 1 to 4 and the lithium-supplementing additive provided by the comparative examples were assembled into cathodes and lithium-ion batteries according to the following methods:
cathode: according to the mass ratio of lithium-supplementing additive: SP:PVDF=95:2:3, the lithium-supplementing additives provided in the above examples 1 to 4 were mixed with SP:PVDF respectively, added with an appropriate amount of NMP solvent and ball milled and stirred for 60 mins at a rotational speed of 30 HZ. After homogenization-coating-drying-cutting operations, the cathode sheets were prepared respectively, and the cathode sheets were baked in a vacuum oven at 100°C to remove traces of water;
anode: a lithium metal sheet with a diameter of 16 mm;
Electrolyte: 1 mol/L LiPF₆ solution, with a solvent being composed of EC (ethylene carbonate) and DEC (diethyl carbonate) in a volume ratio of 1:1;
Separator: polypropylene microporous separator;
lithium-ion battery assembly: the lithium-ion battery was assembled in a glove box in an inert atmosphere according to the assembly sequence of lithium metal sheet-separator-electrolyte-cathode sheet.

### Related characteristic test

### 1. Characteristic test of lithium-supplementing additives

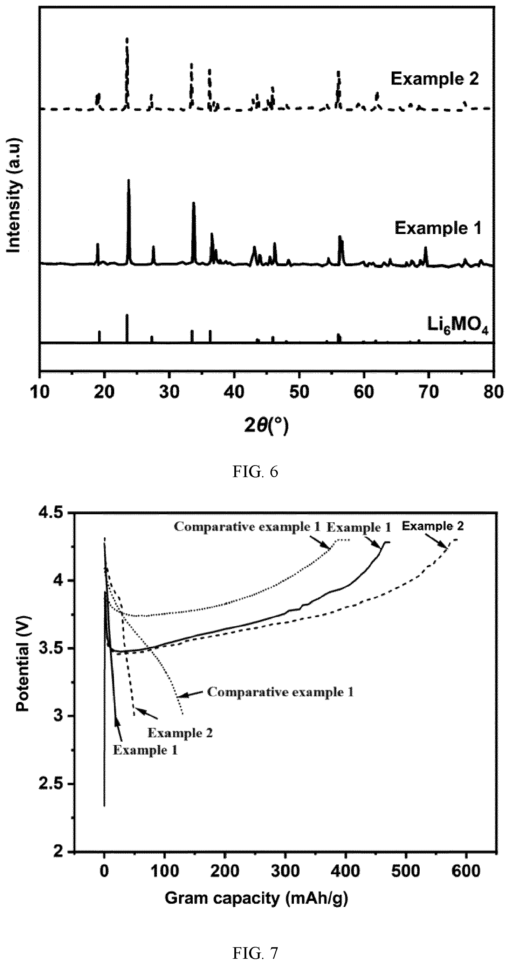

The lithium-supplementing additives provided in above Examples 1 to 4 were subjected to XRD analysis respectively, in which, the XRD patterns of the lithium-supplementing additives provided in Examples 1 and 2 are shown in FIG. 6. It can be seen from the XRD patterns that the peak positions of the XRD patterns of the lithium-supplementing additives in Example 1 and Example 2 match with a standard peak position of the Li₆MO₄ material in the crystal structure database whose unit cell is an inverse fluorite structure and whose crystal structure space group is P42/ nmc [137]. The XRD pattern of the lithium-supplementing additives provided by other examples are similar to those shown in FIG. 6, that is, the peak positions of the XRD pattern match with those having the unit cell in the crystal structure database with an inverse fluorite structure.

### 2. Electrochemical performance of lithium-ion batteries:

The lithium-ion battery containing the lithium-supplementing additive provided by Example 1 to Example 4 and the lithium-ion battery containing the lithium-supplementing additive provided by Comparative example 1 were respectively performed with the tests for lithium-supplementing gram capacity performances according to the following methods:
The lithium-ion batteries were respectively charged to 4.3V at a rate of 0.05 C with a constant current and a constant voltage, until a cut-off current reached 0.02 C, then put aside for 5 mins, discharged to 2.8V at a rate of 0.05 C with a constant current. The measured results were shown in FIG. 7.

The results show that the lithium-ion battery containing the lithium-supplementing additive provided by Example 1 has a charging lithium-supplementing gram capacity of 473 mAh/g, a discharge gram capacity of 18 mAh/g, and an initial efficiency of 3.8%; the lithium-ion battery containing the lithium-supplementing additive provided by Example 2 has a charging lithium-supplementing gram capacity of 588 mAh/g, a discharge gram capacity of 49 mAh/g, and an initial efficiency of 8.3%; and the lithium-ion battery containing the lithium-supplementing additive provided by Comparative example 1 has a charging lithium-supplementing gram capacity of 405 mAh/g, a discharge gram capacity of 130 mAh/g, and an initial efficiency of 32%. The test results of lithium supplementary gram capacity of lithium-ion batteries containing lithium-supplementing additives provided by other examples are close to those of Example 1 and Example 2, but are significantly better than those of Comparative example 1. It can be seen from the lithium-supplementing gram capacity test that the xLi₆MO₄·(1-x)Li₂O material with an inverse fluorite structure and a crystal structure space group of P42/ nmc [137], when used as a cathode lithium-supplementing additive, can obtain higher lithium-supplementing gram capacity, as well as lower initial efficiency, that is, lower reversible specific capacity, which makes lithium-supplementing more efficient; and meanwhile, xLi₆MO₄·(1-x)Li₂O materials have abundant reserves of some transition metals, and superior costs to the existing market technical solutions, thus having a better market prospect.

The above descriptions are only preferred embodiments of the present application, and are not intended to limit the present application. Any modifications, equivalent replacements, and improvements made within the spirit and principles of the present application should be included within the protection scope of the present application.

## Claims

1. A lithium-supplementing additive, the lithium-supplementing additive comprising a core body and a functional encapsulation layer covering the core body, wherein, the core body comprises a lithium-supplementing material, and the lithium-supplementing material is a lithium-containing material having a unidirectional capacity, in which lithium ions are deintercalated during a first charge and free from intercalation during a discharge.

2. The lithium-supplementing additive according to claim 1, wherein a unit cell of the lithium-supplementing material is in an inverse fluorite structure having a crystal structure space group of P42/ nmc [137].

3. The lithium-supplementing additive according to claim 1 or 2, wherein
the lithium-supplementing material comprises a chemical formula of xLi₆MO₄·(1-x)Li₂O, wherein in the chemical formula, 0 < x≤1, M comprises at least one of Cr, Mn, Fe, Co, Ni, Cu, and Zn; and/or
the core body has a particle size of 100 nm to 50 µm.

4. The lithium-supplementing additive according to any one of claims 1-3, wherein
the core body is a primary particle, and the particle size of the primary particle is 100 nm to 10 µm; or/and
the core body is a secondary particle, and the particle size of the secondary particle is 200 nm to 50 µm.

5. The lithium-supplementing additive according to any one of claims 1-4, wherein the functional encapsulation layer comprises at least one of an ionic conductor encapsulation layer and an electronic conductor encapsulation layer.

6. The lithium-supplementing additive according to claim 5, wherein
a material of the electronic conductor encapsulation layer comprises at least one of a conductive carbon material, a conductive polymer, or a conductive oxide; and/or
a content of the electronic conductor encapsulation layer accounts for 0.1 wt. % to 30 wt. % of a content of the lithium-supplementing additive; and/or
a thickness of the electronic conductor encapsulation layer is 1 nm to 100 nm.

7. The lithium-supplementing additive according to claim 5 or 6, wherein a material of the electronic conductor encapsulation layer comprises a conductive carbon material and a lithium carbonate, and the electronic conductor encapsulation layer is in contact with the core body.

8. The lithium-supplementing additive according to claim 7, wherein a content of lithium carbonate accounts for 0.5 wt. % to 1.5 wt. % of a content of the electronic conductor encapsulation layer.

9. The lithium-supplementing additive according to any one of claims 5-8, wherein
a material of the ionic conductor encapsulation layer comprises at least one of perovskite, NASICON, garnet, or polymer solid electrolytes; and/or
a thickness of the ionic conductor encapsulation layer is 1 nm to 200 nm.

10. A preparation method for a lithium-supplementing additive, comprising steps of:
providing a core body material for lithium supplementation, wherein the core body material comprises a lithium-supplementing material, and the lithium-supplementing material is a lithium-containing material having a unidirectional capacity, in which lithium ions are deintercalated during a first charge and free from intercalation during a discharge; and
in a first protective atmosphere, forming a functional encapsulation layer on a surface of the core body material, and enabling the functional encapsulation layer to completely cover the core body material to obtain a lithium-supplementing additive.

11. The preparation method according to claim 10, wherein
the formed functional encapsulation layer comprises an electronic conductor encapsulation layer, and the step of forming the functional encapsulation layer on the surface of the core body material comprises the following step:
forming the electronic conductor encapsulation layer that completely covers the core body material on the surface of the core body material;
or alternatively,
the formed functional encapsulation layer comprises an ionic conductor encapsulation layer, and the step of forming the functional encapsulation layer on the surface of the core body material comprises the following step:
forming the ionic conductor encapsulation layer that completely covers the core body material on the surface of the core body material;
or alternatively,
the formed functional encapsulation layer comprises composite layers formed by the electronic conductor encapsulation layer and the ionic conductor encapsulation layer, and the step of forming the functional encapsulation layer on the surface of the core body material comprises the following step:
forming the electronic conductor encapsulation layer that completely covers the core body material on the surface of the core body material, and forming the ionic conductor encapsulation layer on a surface of the electronic conductor encapsulation layer;
wherein, a material of the electronic conductor encapsulation layer comprises at least one of a conductive carbon material, a conductive polymer, or a conductive oxide; and a material of the ionic conductor encapsulation layer comprises at least one of perovskite, NASICON, garnet, or polymer solid electrolytes.

12. The preparation method according to claim 11, wherein
a material of the formed electronic conductor encapsulation layer comprises a mixture of a conductive carbon material and lithium carbonate; and the step of forming the electronic conductor encapsulation layer comprises steps of:
forming a conductive carbon coating layer that completely covers the core body material on the surface of the core body material, and performing heat treatment in a protective atmosphere.

13. The preparation method according to any one of claims 10-12, wherein the lithium-supplementing material comprises a lithium-supplementing material having a chemical formula of xLi₆MO₄·(1-x)Li₂O, and the lithium-supplementing material having chemical formula of xLi₆MO₄·(1-x)Li₂O is prepared by the following steps:
mixing an oxide of an metal M with a lithium source according to an elemental stoichiometric ratio of xLi₆MO₄·(1-x)Li₂O, to obtain a precursor of xLi₆MO₄·(1-x)Li₂O, wherein, in the chemical formula, 0 < x≤1, and M comprises at least one of Cr, Mn, Fe, Co, Ni, Cu, and Zn; and
sintering the precursor in a second protective atmosphere, and enabling a unit cell of xLi₆MO₄·(1-x)Li₂O to be an inverse fluorite structure and have a crystal structure space group of P42/ nmc [137].

14. The preparation method according to claim 13, wherein
the sintering step is performed at a temperature of 400°C to 1000°C for a duration of 1 hr to 24 hrs; and/or
the sintering step comprises performing said sintering at a heating rate of 0.5°C/min to 10°C/min until the temperature is 400°C to 1000°C; and/or
the second protective atmosphere is an atmosphere formed by any protective gas of a nitrogen gas, an argon gas, a nitrogen-argon mixed gas, a nitrogen-hydrogen mixed gas, and an argon-hydrogen mixed gas; and/or
the oxide of the metal M comprises at least one of CrO, Cr₂O₃, CrO₂, CrO₃, MnO, Mn₂O₃, MnO₂, Mn₃O₄, FeO, Fe₂O₃, Fe₃O₄, CoO, Co₂O₃, CoOz, Co₃O₄, NiO, Ni₂O₃, CuO, and ZnO; and/or the lithium source comprises at least one of LiOH, LiOH·H₂O, Li₂O, Li₂CO₃, LiNO₃, and LiAc.

15. An electrode plate, comprising a current collector and an electrode active layer bonded to a surface of the current collector, wherein the electrode active layer is doped with the lithium-supplementing additive according to any one of claims 1-9 or is the lithium-supplementing additive prepared by the preparation method according to any one of claims 10-14.

16. A secondary battery, comprising a cathode sheet and an anode sheet, wherein the cathode sheet or the anode sheet is the electrode plate according to claim 15.
